# EUROPEAN PATENT APPLICATION

(11) **EP 4 531 153 A1**
(43) Date of publication of application: **02.04.2025**
(21) Application number: 24202195.4
(22) Date of filing: 24.09.2024
(51) Int. Cl.: H01M 10/0525, H01M 10/0567, H01M 10/42

(54) **SECONDARY BATTERY AND ELECTRONIC DEVICE**

(30) Priority: 28.09.2023 CN 202311281928
(71) Applicant: Dongguan Amperex Technology Limited, Dongguan City, Guangdong Province 523000 (CN)
(72) Inventor: WANG, Rui, Dongguan City, Guangdong 523000 (CN); LU, Jianxin, Dongguan City, Guangdong 523000 (CN); WANG, Xiang, Dongguan City, Guangdong 523000 (CN); TANG, Chao, Dongguan City, Guangdong 523000 (CN)
(74) Representative: Icosa

(57) **Abstract**

A secondary battery includes a positive electrode plate and an electrolyte solution. The electrolyte solution includes a compound having sulfur-oxygen double bond and a nitrile compound. Based on a total mass of the electrolyte solution, a mass percentage of the compound having sulfur-oxygen double bond is A1 %, a mass percentage of the nitrile compound is A2 %, 0.08 ≤ A1/A2 ≤ 2.15; and a sum of the mass percentages of the compound having sulfur-oxygen double bond and the nitrile compound is A %, 3 ≤ A ≤ 15. The positive electrode plate includes a positive electrode material layer, a thickness of the positive electrode material layer is D µm , and 0.08 ≤ A/D ≤ 0.42.

## Description

### TECHNICAL FIELD

This application relates to the technical field of electrochemistry, and in particular to a secondary battery and an electronic device.

### BACKGROUND

Secondary batteries (e.g., lithium-ion batteries) are widely used in the fields of smartphones, wearable devices, consumer-grade drones, electric vehicles and the like due to their high energy density, long cycle life, lack of memory effect and other advantages. With the wide application of the lithium-ion batteries in the above fields, the market demand for the energy density of the lithium-ion batteries is becoming higher and higher.

As the energy density increases, the voltage of the lithium-ion batteries also increases. The increase in the voltage of the lithium-ion batteries affects a positive electrode material layer, exacerbates the side reaction between an electrolyte solution and a positive electrode, and soluble by-products and gases generated as well as transition metal ions dissolved from the positive electrode shuttle to a negative electrode, while soluble by-products and gases generated in the negative electrode shuttle to the positive electrode to undergo oxidization, resulting in an abnormal charging/discharging capacity ratio (C/D) in the cycling process of the lithium-ion batteries.

### SUMMARY

An objective of this application is to provide a secondary battery and an electronic apparatus to relieve the problem of an abnormal charging/discharging capacity ratio in the cycling process of the secondary battery. The specific technical solutions are as follows:

A first aspect of this application provides a secondary battery. The secondary battery includes a positive electrode plate, a negative electrode plate, a separator and an electrolyte solution. The electrolyte solution includes a compound having sulfur-oxygen double bond and a nitrile compound, based on a total mass of the electrolyte solution, a mass percentage of the compound having sulfur-oxygen double bond is A1 %, a mass percentage of the nitrile compound is A2 %, and 0.08 ≤ A1/A2 ≤ 2.15; and a sum of the mass percentages of the compound having sulfur-oxygen double bond and the nitrile compound is A %, and 3 ≤ A ≤ 15. The positive electrode plate includes a positive current collector and a positive electrode material layer disposed on at least one surface of the positive current collector, a thickness of the positive electrode material layer is D µm , and 0.08 ≤ A/D ≤ 0.42. By regulating the electrolyte solution to include the compound having sulfur-oxygen double bond and the nitrile compound, and the mass ratio and the sum of the masses of the compound having sulfur-oxygen double bond and the nitrile compound, and a ratio of the sum of the masses of the compound having sulfur-oxygen double bond and the nitrile compound to the thickness of the positive electrode material layer to be within the range of this application, the problem of an abnormal charging/discharging capacity ratio in the cycling process of the secondary battery can be relieved.

In one implementation solution of this application, the secondary battery satisfies at least one of the following characteristics: (1)0.142 ≤ A/D ≤ 0.42; (2) 0.5 ≤ A1 ≤ 5.2, 2.4 ≤ A2 ≤ 8.1; (3) 15 ≤ D ≤ 60. The secondary battery has the above characteristics, which are conducive to further relieving the problem of an abnormal charging/discharging capacity ratio in the cycling process of the secondary battery. In addition, it also enables the secondary battery to have a higher energy density while taking into account better cycling performance.

In one implementation solution of this application, the compound having sulfur-oxygen double bond includes at least one selected from the group consisting of 1,3-propanesultone, ethylene sulfate, prop-1-ene-1,3-sultone, 3-fluoro-1,3-propanesultone, 1,2-propanesultone, 1,4-butane sultone, 2,4-butane sultone, and 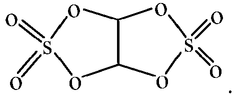 The nitrile compound includes at least one of malononitrile, succinonitrile, glutaronitrile, adipic dinitrile, pimelic dinitrile, suberonitrile, 3,3'-oxy dipropanenitrile, 2-hexenedinitrile, fumaronitrile, 2-pentenedinitrile, 2-methylglutaronitrile, 4-cyanoheptanedinitrile, (Z)-1,2-dicyanoethylene, 2,2,3,3-tetrafluorosuccinonitrile, ethylene glycol bis(propionitrile) ether, 1,3,6-hexanetricarbonitrile, 1,3,5-pentanetricarbonitrile, heptanedinitrile,4-(2-cyanoethyl)-, and 1,2,3-tris(2-cyanoethoxy)propane. By selecting the above compound having sulfur-oxygen double bond, a more stable positive electrolytic interfacial film can be formed on the surface of the positive electrode material layer, thereby relieving the problem of the abnormal charging/discharging capacity ratio in the cycling process of the secondary battery. By selecting the above nitrile compound, the nitrile compound can be adsorbed on the surface of a positive electrode to cover positive electrode active sites, and reduce the side reaction between the electrolyte solution on the positive electrode side and the positive electrode material layer, thereby relieving the problem of the abnormal charging/discharging capacity ratio in the cycling process of the secondary battery.

In one implementation solution of this application, the electrolyte solution satisfies at least one selected from the group consisting of the following characteristics: (1) the compound having sulfur-oxygen double bond includes at least one selected from the group consisting of 1,3-propanesultone and ethylene sulfate, and the electrolyte solution further includes adipic dinitrile, succinonitrile and 1,3,6-hexanetricarbonitrile; or (2) the compound having sulfur-oxygen double bond includes at least one selected from the group consisting of 1,3-propanesultone and ethylene sulfate, and the electrolyte solution further includes adipic dinitrile and ethylene glycol bis(propionitrile) ether. The secondary battery has the above characteristics, which are conducive to further relieving the problem of the abnormal charging/discharging capacity ratio in the cycling process of the secondary battery.

In one implementation solution of this application, the electrolyte solution further includes a fluoroethylene carbonate (FEC), based on the total mass of the electrolyte solution, a mass percentage of the fluoroethylene carbonate is A3 %, and 1.8 ≤ A3 ≤ 9.8. By regulating the electrolyte solution to further include the FEC and the mass percentage of the FEC to be within the range of this application, the FEC is able to form a more stable solid electrolytic interfacial film on the surface of a negative electrode material layer, the amount of side-reaction products generated on a negative electrode side is reduced, and the synergistic protection for the positive electrode and a negative electrode can reduce the occurrence of the shuttle process of the side-reaction products on the positive electrode side to the negative electrode and the shuttle process of the side-reaction products on the negative electrode side to the positive electrode, thereby relieving the problem of the abnormal charging/discharging capacity ratio in the cycling process of the secondary battery.

In one implementation solution of this application, 0.5 ≤ A/A3 ≤ 5.2. By regulating a value of A/A3 to be within the range of this application, it helps to form a more complete positive electrolytic interfacial film of a suitable thickness on the surface of the positive electrode material layer, and at the same time form a more complete solid electrolytic interfacial film of a suitable thickness on the surface of the negative electrode material layer, thereby relieving the problem of the abnormal charging/discharging capacity ratio in the cycling process of the secondary battery.

In one implementation solution of this application, the electrolyte solution further includes a compound of Formula (I): 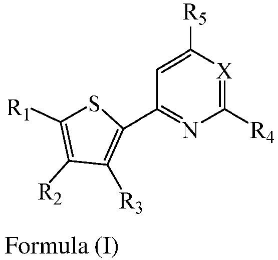 where X is selected from CR₆ or N; R₁, R₂ and R₃ are each independently selected from a hydrogen atom, halogen, a C₂ to C₅ carbonyl group, a C₁ to C₅ aldehyde group, an unsubstituted or Ra-substituted C₁ to C₅ alkyl group, an unsubstituted or Ra-substituted C₂ to C₅ alkenyl group, an unsubstituted or Ra-substituted C₂ to C₅ alkynyl group, an unsubstituted or Ra-substituted C₃ to C₅ N-heterocyclic alkyl group, and a C₃ to C₅ N-heteroaryl group; and R₄, R₅ and R₆ are each independently selected from a hydrogen atom, a C₁ to C₅ alkyl sulfide group, a C₂ to C₅ thioether, a C₃ to C₅ N-heterocyclic alkyl group, a C₃ to C₅ N-heteroaryl group, an unsubstituted or Ra-substituted C₁ to C₅ alkyl group, an unsubstituted or Ra-substituted C₂ to C₅ alkenyl group, and an unsubstituted or Ra-substituted C₂ to C₅ alkyne group. A substituent group Ra of each group is independently selected from halogen, a C₁ to C₅ aldehyde group, a C₂ to C₅ carbonyl group, a C₂ to C₅ ester group, a sulfonyl group, an amino group, and a C₂ to C₅ amide group or cyano group. Based on the total mass of the electrolyte solution, the compound of Formula (I) has a mass percentage of A4 %, 0.01 ≤ A4 ≤ 5, preferably 0.1 ≤ A4 ≤ 3. By regulating the electrolyte solution to further include the compound of Formula (I) and the type and content of the compound of Formula (I) to be within the range of this application, it helps to form a more stable positive electrolytic interfacial film with better ion diffusion performance on the surface of the positive electrode material layer, thereby relieving the problem of the abnormal charging/discharging capacity ratio in the cycling process of the secondary battery.

In one implementation solution of this application, the compound of Formula (I) is at least one selected from the following compounds:

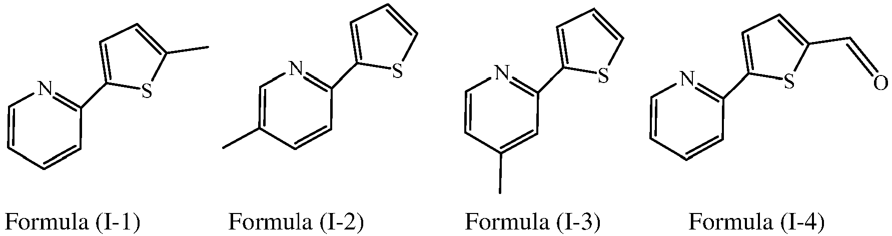

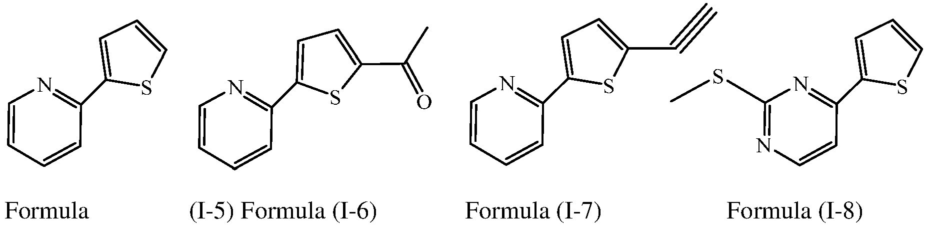

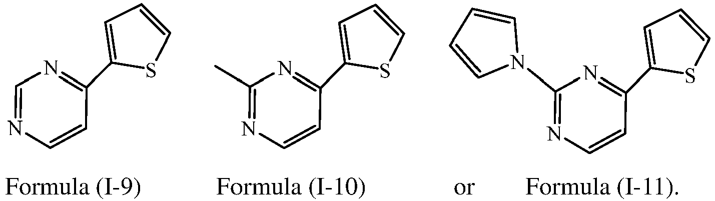

By selecting the above compound of Formula (I), a more stable positive electrolytic interfacial film with better ion diffusion performance can be formed on the surface of the positive electrode material layer, thereby relieving the problem of the abnormal charging/discharging capacity ratio in the cycling process of the secondary battery.

In one implementation solution of this application, the positive electrode material layer includes a positive active material, a particle diameter Dv10 of the positive active material is D1 µm, a particle diameter Dv50 of the positive active material is D2 µm , 2.4 ≤ D1 ≤ 5.5, and 1.5 ≤ D2/D1 ≤ 5. By regulating values of D1 and D2/D1 to be within the range of this application, the positive active material can have a suitable particle diameter, and can reduce the side reaction between the electrolyte solution on the positive electrode side and the positive electrode material layer, thereby reducing the generation of side-reaction products on the positive electrode side, and thus relieving the problem of the abnormal charging/discharging capacity ratio in the cycling process of the secondary battery.

In one implementation solution of this application, 4.8 ≤ A x (D2/D1) ≤ 55, preferably 10 ≤ A x (D2/D1) ≤ 50. By regulating a value of A x (D2/D1) to be within the range of this application, the sum of the mass percentages of the compound having sulfur-oxygen double bond and the nitrile compound is matched with the particle diameter of the positive active material to synergistically play a role in reducing the side reaction between the electrolyte solution on the positive electrode side and the positive electrode material layer and reducing the amount of the side-reaction products generated on the positive electrode side, thereby relieving the problem of the abnormal charging/discharging capacity ratio in the cycling process of the secondary battery.

In one implementation solution of this application, an average sphericity of the positive active material is S50, and 0.65 ≤ S50 ≤ 0.99. By regulating a value of S50 to be within the range of this application, it helps to reduce the pressure between positive active material particles in the positive electrode material layer during cold pressing, reduce the degree of crushing of the positive active material particles, and reduce the occurrence of the side reaction between the electrolyte solution on the positive electrode side and the positive electrode material layer as well as the amount of the side-reaction products generated on the positive electrode side, thereby relieving the problem of the abnormal charging/discharging capacity ratio in the cycling process of the secondary battery.

A second aspect of this application provides an electronic apparatus, including the secondary battery in any one of the foregoing implementation solutions. Therefore, the electronic apparatus provided by this application has good use performance.

This application has the beneficial effects:
This application provides a secondary battery and an electronic apparatus. The secondary battery includes a positive electrode plate, a negative electrode plate, a separator and an electrolyte solution. The electrolyte solution includes a compound having sulfur-oxygen double bond and a nitrile compound, based on a total mass of the electrolyte solution, the compound having sulfur-oxygen double bond has a mass percentage of A1 %, the nitrile compound has a mass percentage of A2 %, and 0.08 ≤ A1/A2 ≤ 2.15; and a sum of the mass percentages of the compound having sulfur-oxygen double bond and the nitrile compound is A %, and 3 ≤ A ≤ 15. The positive electrode plate includes a positive current collector and a positive electrode material layer disposed on at least one surface of the positive current collector, the positive electrode material layer has a thickness of D µm, and 0.08 ≤ A/D ≤ 0.42. By regulating the electrolyte solution to include the compound having sulfur-oxygen double bond and the nitrile compound, and the mass ratio and the sum of the masses of the compound having sulfur-oxygen double bond and the nitrile compound, and a ratio of the sum of the masses of the compound having sulfur-oxygen double bond and the nitrile compound to the thickness of the positive electrode material layer to be within the range of this application, the problem of the abnormal charging/discharging capacity ratio in the cycling process can be relieved.

Of course, implementing any product or method of this application is not necessary to achieve all the above-mentioned advantages simultaneously.

### DETAILED DESCRIPTION OF EMBODIMENTS

The following will clearly and completely describe the technical solutions in embodiments of this application. Obviously, the described embodiments are only part of the embodiments of this application, not all of the embodiments. All other embodiments obtained by a person skilled in the art based on this application fall in the range of protection of this application.

It is to be noted that in the content below, this application is explained by an example using a lithium-ion battery as a secondary battery, but the secondary battery of this application is not limited to the lithium-ion battery. The specific technical solutions are as follows:

This application provides a secondary battery. The secondary battery includes a positive electrode plate, a negative electrode plate, a separator and an electrolyte solution. The electrolyte solution includes a compound having sulfur-oxygen double bond and a nitrile compound, based on a total mass of the electrolyte solution, the compound having sulfur-oxygen double bond has a mass percentage of A1 %, the nitrile compound has a mass percentage of A2 %, and 0.08 ≤ A1/A2 ≤ 2.15. Exemplarily, A1/A2 may be 0.08, 0.1, 0.2, 0.4, 0.6, 0.8, 1, 1.2, 1.4, 1.6, 1.8, 2, 2.1, 2.15, or a value falling within a range consisting of any two of the above values. A sum of the mass percentages of the compound having sulfur-oxygen double bond and the nitrile compound is A %, and 3 ≤ A ≤ 15. Exemplarily, A may be 3, 4, 5, 6, 7, 8, 9, 10, 11, 12, 13, 14, 15 or a value falling within a range consisting of any two of the above values. The positive electrode plate includes a positive current collector and a positive electrode material layer disposed on at least one surface of the positive current collector, the positive electrode material layer has a thickness of D µm, and 0.08 ≤ A/D ≤ 0.42, preferably 0.142 ≤ A/D ≤ 0.42. Exemplarily, A/D may be 0.08, 0.1, 0.13, 0.142, 0.15, 0.17, 0.2, 0.23, 0.25, 0.27, 0.3, 0.33, 0.35, 0.37, 0.4, 0.42, or a value falling within a range consisting of any two of the above values. The negative electrode plate includes a negative current collector and a negative electrode material layer disposed on at least one surface of the negative current collector.

Applicants' research found that the electrolyte solution includes the compound having sulfur-oxygen double bond and the nitrile compound, the nitrile compound is adsorbed on the surface of a positive electrode to cover positive electrode active sites, the compound having sulfur-oxygen double bond forms a more stable electrolytic interfacial film on the surface of the positive electrode material layer, and the compound having sulfur-oxygen double bond and the nitrile compound are used together to synergistically play a role in reducing the side reaction between the electrolyte solution on the positive electrode side and the positive electrode material layer. Moreover, by regulating a ratio of the sum of the mass percentages of the compound having sulfur-oxygen double bond and the nitrile compound to the thickness of the positive electrode material layer, it can effectively cover the positive electrode active sites and form the positive electrolytic interfacial film of a suitable thickness, which can reduce the amount of side-reaction products generated on the positive electrode side and the dissolving-out amount of transition metal ions, and reduce the risk of shuttle-type self-discharge and self-discharge caused by transition metal microdendrites, thereby relieving the problem of the abnormal charging/discharging capacity ratio in the cycling process of the secondary battery. Therefore, by regulating the electrolyte solution to include the compound having sulfur-oxygen double bond and the nitrile compound, and the mass ratio and the sum of the masses of the compound having sulfur-oxygen double bond and the nitrile compound, and the ratio of the sum of the masses of the compound having sulfur-oxygen double bond and the nitrile compound to the thickness of the positive electrode material layer to be within the range of this application, the problem of the abnormal charging/discharging capacity ratio in the cycling process of the secondary battery can be relieved. In this application, the maximum value (C/D)ₘₐₓ of C/D in the secondary battery cycle is used as an indicator for evaluating the C/D of the lithium-ion battery, the abnormal charging-discharging capacity ratio in the cycling process of the secondary battery refers to an excessive loss of capacity in the cycling process or an excessive degree of self-discharge, and specifically, (C/D)ₘₐₓ ≥ 1.05 is recognized as the abnormal charging/discharging capacity ratio in the cycling process of the secondary battery.

In one implementation solution of this application, 0.5 ≤ A1 ≤ 5.2, and 2.4 ≤ A2 ≤ 8.1. Exemplarily, A1 may be 0.5, 1, 1.4, 1.6, 1.8, 2, 2.2, 2.4, 2.6, 2.8, 3, 3.2, 3.4, 3.6, 3.8, 4, 4.2, 4.4, 4.6, 4.8, 5, 5.2, or a value falling within a range consisting of any two of the above values; and A2 may be 2.4, 2.8, 3, 3.4, 3.8, 4, 4.4, 4.8, 5, 5.4, 5.8, 6, 6.4, 6.8, 7, 7.4, 7.8, 8, 8.1 or a value falling within a range consisting of any two of the above values. By regulating values of A1 and A2 to be within the range of this application, it helps to form the positive electrolytic interfacial film with effective coverage on the surface of the positive electrode material layer, and at the same time, the amount of side-reaction products on the positive electrode side is proper and the thickness of the formed positive electrolytic interfacial film is proper, which is conductive to relieving the problem of the abnormal charging/discharging capacity ratio in the cycling process of the secondary battery.

In one implementation solution of this application, 15 ≤ D ≤ 60. Exemplarily, D may be 15, 20, 25, 30, 35, 40, 45, 50, 55, 60 or a value falling within a range consisting of any two of the above values. By regulating a value of D to be within the range of this application, the secondary battery can be made to have a high energy density while taking into account better cycling performance.

In one implementation solution of this application, the compound having sulfur-oxygen double bond includes at least one of 1,3-propanesultone, ethylene sulfate, prop-1-ene-1,3-sultone, 3-fluoro-1,3-propanesultone, 1,2-propanesultone, 1,4-butane sultone, 2,4-butane sultone, or 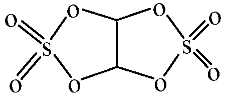 (3a,6a-dihydro-2,5-dithia-[1,3,2]dioxathiolato[4,5-d][1,3,2]dioxathiolato-2,2,5,5-tetrone). By selecting the above compound having sulfur-oxygen double bond, the more stable positive electrolytic interfacial film can be formed on the surface of the positive electrode material layer, thereby relieving the problem of the abnormal charging/discharging capacity ratio in the cycling process of the secondary battery.

In one implementation solution of this application, the nitrile compound includes at least one of malononitrile, succinonitrile, glutaronitrile, adipic dinitrile, pimelic dinitrile, suberonitrile, 3,3'-oxydipropanenitrile, 2-hexenedinitrile, fumaronitrile, 2-pentenedinitrile, 2-methylglutaronitrile, 4-cyanoheptanedinitrile, (Z)-1,2-dicyanoethylene, 2,2,3,3-tetrafluorosuccinonitrile, ethylene glycol bis(propionitrile) ether, 1,3,6-hexanetricarbonitrile, 1,3,5-pentanetricarbonitrile, heptanedinitrile,4-(2-cyanoethyl)-, or 1,2,3-tris(2-cyanoethoxy)propane. By selecting the above nitrile compound, the nitrile compound can be adsorbed on the surface of the positive electrode to cover the positive electrode active sites, and reduce the side reaction between the electrolyte solution on the positive electrode side and the positive electrode material layer, thereby relieving the problem of the abnormal charging/discharging capacity ratio in the cycling process of the secondary battery.

In one implementation solution of this application, the compound having sulfur-oxygen double bond includes at least one of 1,3-propanesultone or ethylene sulfate, and the electrolyte solution further includes adipic dinitrile, succinonitrile and 1,3,6-hexanetricarbonitrile. The electrolyte solution includes the above compound, which is conductive to forming the more stable positive electrolytic interfacial film on the surface of the positive electrode material layer and being adsorbed on the surface of the positive electrode to cover the positive electrode active sites, reducing the side reaction between the electrolyte solution on the positive electrode side and the positive electrode material layer, thereby further relieving the problem of the abnormal charging/discharging capacity ratio in the cycling process of the secondary battery.

In one implementation solution of this application, the compound having sulfur-oxygen double bond includes at least one of 1,3-propanesultone or ethylene sulfate, and the electrolyte solution further includes adipic dinitrile and ethylene glycol bis(propionitrile) ether. The electrolyte solution includes the above compound, which is conductive to forming the more stable positive electrolytic interfacial film on the surface of the positive electrode material layer and being adsorbed on the surface of the positive electrode to cover the positive electrode active sites, reducing the side reaction between the electrolyte solution on the positive electrode side and the positive electrode material layer, thereby further relieving the problem of the abnormal charging/discharging capacity ratio in the cycling process of the secondary battery.

In one implementation solution of this application, the electrolyte solution further includes fluoroethylene carbonate (FEC), and based on the total mass of the electrolyte solution, the fluoroethylene carbonate has a mass percentage of A3 %, and 1.8 ≤ A3 ≤ 9.8. Exemplarily, A3 may be 1.8, 2, 2.5, 3, 3.5, 4, 4.5, 5, 5.5, 6, 6.5, 7, 7.5, 8, 8.5, 9, 9.5, 9.8, or a value falling within a range consisting of any two of the above values. The electrolyte solution includes the FEC and the mass percentage of the FEC is regulated to be within the range of this application, the FEC is able to form a more stable solid electrolytic interfacial film on the surface of the negative electrode material layer, the generation of side-reaction products on a negative electrode side is reduced, and the synergistic protection for the positive electrode and a negative electrode can reduce the occurrence of the shuttle process of the side-reaction products on the positive electrode side to the negative electrode and the shuttle process of the side-reaction products on the negative electrode side to the positive electrode, thereby relieving the problem of the abnormal charging/discharging capacity ratio in the cycling process of the secondary battery.

In one implementation solution of this application, 0.5 ≤ A/A3 ≤ 5.2. Exemplarily, A/A3 may be 0.5, 0.7, 1, 1.3, 1.5, 1.7, 2, 2.3, 2.5, 2.7, 3, 3.3, 3.5, 3.7, 4, 4.3, 4.5, 4.7, 5, 5.2, or a value falling within a range consisting of any two of the above values. By regulating a value of A/A3 to be within the range of this application, it helps to form the more complete positive electrolytic interfacial film of a suitable thickness on the surface of the positive electrode material layer, and at the same time form the more complete solid electrolytic interfacial film of a suitable thickness on the surface of the negative electrode material layer, thereby relieving the problem of the abnormal charging/discharging capacity ratio in the cycling process of the secondary battery.

In an implementation solution of this application, the electrolyte solution further includes a compound of formula (I): 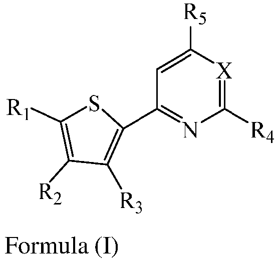 where X is selected from CR₆ or N. R₁, R₂ and R₃ are each independently selected from a hydrogen atom, a halogen, a C₂ to C₅ carbonyl group, a C₁ to C₅ aldehyde group, an unsubstituted or Ra-substituted C₁ to C₅ alkyl group, an unsubstituted or Ra-substituted C₂ to C₅ alkenyl group, an unsubstituted or Ra-substituted C₂ to C₅ alkynyl group, an unsubstituted or Ra-substituted C₃ to C₅ N-heterocyclic alkyl group, and a C₃ to C₅ N-heteroaryl group. R₄, R₅ and R₆ are each independently selected from a hydrogen atom, a C₁ to C₅ alkyl sulfide group, C₂ to C₅ thioether, a C₃ to C₅ N-heterocyclic alkyl group, a C₃ to C₅ N-heteroaryl group, an unsubstituted or Ra-substituted C₁ to C₅ alkyl group, an unsubstituted or Ra-substituted C₂ to C₅ alkenyl group, and an unsubstituted or Ra-substituted C₂ to C₅ alkynyl group, where the C₁ to C₅ alkyl sulfide group is R-S-, and R is a C₁ to C₅ alkyl group. A substituent group Ra of each group is independently selected from halogen, a C₁ to C₅ aldehyde group, a C₂ to C₅ carbonyl group, a C₂ to C₅ ester group, a sulfonyl group, an amino group, and a C₂ to C₅ amide group or cyano group.

In one implementation solution of this application, R₁, R₂, and R₃ are each independently selected from a hydrogen atom, a fluorine atom, a chlorine atom, a bromine atom, an iodine atom, a formaldehyde group, an acetaldehyde group, an ethylcarbonyl group, a propylcarbonyl group, methyl, ethyl, propyl, butyl, vinyl, propenyl, butenyl, ethynyl-, propynyl, butynyl, pyrrolyl, or pyridyl; and R₄, R₅, and R₆ are each independently selected from a hydrogen atom, methylthio, a dimethyl sulfide group, methyl, ethyl, propyl, butyl, vinyl, propenyl, butenyl, ethynyl-, propinyl, butynyl, pyrrolyl, or pyridinyl.

In one implementation solution of this application, based on the total mass of the electrolyte solution, the compound of Formula (I) has a mass percentage of A4 %, 0.01 ≤ A4 ≤ 5, preferably 0.1 ≤ A4 ≤ 3. Exemplarily, A4 may be 0.01, 0.05, 0.1, 0.5, 1, 1.5, 2, 2.5, 3, 3.5, 4, 4.5, 5 or a value falling within a range consisting of any two of the above values. By regulating the electrolyte solution to further include the compound of Formula (I) and the type and content of the compound of Formula (I) to be within the range of this application, it helps to form the more stable positive electrolytic interfacial film with better ion diffusion performance on the surface of the positive electrode material layer, thereby relieving the problem of the abnormal charging/discharging capacity ratio in the cycling process of the secondary battery.

In an implementation solution of this application, the compound of formula (I) is at least one selected from the following compounds:

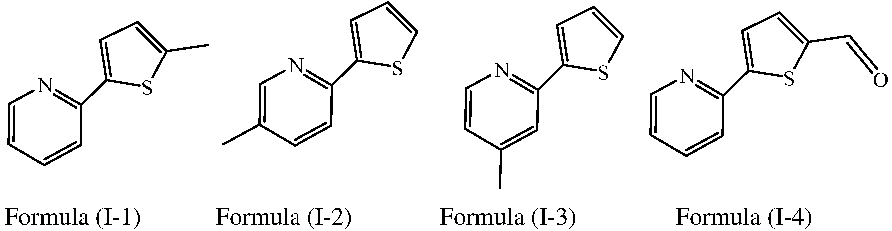

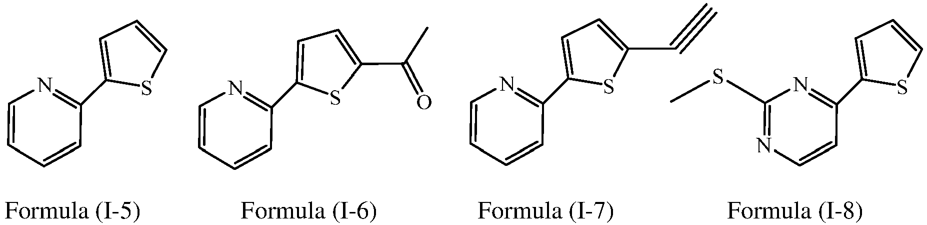

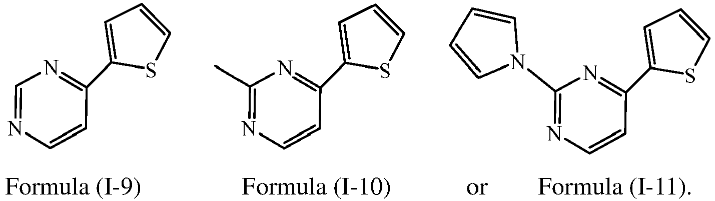

By selecting the above compound of Formula (I), a more stable positive electrolytic interfacial film with better ion diffusion performance can be formed on the surface of the positive electrode material layer, thereby relieving the problem of the abnormal charging/discharging capacity ratio in the cycling process of the secondary battery.

In one implementation solution of this application, the positive electrode material layer includes a positive active material, the positive active material has a particle diameter Dv10 of D1 µm, the positive active material has a particle diameter Dv50 of D2 µm, and 2.4 ≤ D1 ≤ 5.5. Exemplarily, D1 may be 2.4, 2.6, 2.8, 3, 3.2, 3.4, 3.6, 3.8, 4, 4.2, 4.4, 4.6, 4.8, 5, 5.2, 5.4, 5.5, or a value falling within a range consisting of any two of the above values.1.5 ≤ D2/D1 ≤ 5. Exemplarily, D2/D1 may be 1.5, 1.7, 1.9, 2, 2.3, 2.5, 2.7, 2.9, 3, 3.3, 3.5, 3.7, 3.9, 4, 4.3, 4.5, 4.7, 4.9, 5 or a value falling within a range consisting of any two of the above values. By regulating values of D1 and D2/D1 to be within the range of this application, the positive active material can have a suitable particle diameter, and can reduce the side reaction between the electrolyte solution on the positive electrode side and the positive electrode material layer, thereby reducing the generation of the side-reaction products on the positive electrode side, and thus relieving the problem of the abnormal charging/discharging capacity ratio in the cycling process of the secondary battery.

In this application, the positive active material has a particle diameter Dv50 of D2 µm, and 3.6 ≤ D2 ≤ 27.5. Exemplarily, D2 may be 3.6, 5, 8, 10, 12, 15, 20, 22, 25, 27.5 or a value falling within a range consisting of any two of the above values. By regulating the value of D2 to be within the range of this application, the positive active material can have a suitable particle diameter, and can reduce the side reaction between the electrolyte solution on the positive electrode side and the positive electrode material layer, thereby reducing the generation of the side-reaction products on the positive electrode side, and thus relieving the problem of the abnormal charging/discharging capacity ratio in the cycling process of the secondary battery.

In one implementation solution of this application, 4.8 ≤ A x (D2/D1) ≤ 55, preferably 10 ≤ A x (D2/D1) ≤ 50. Exemplarily, A x (D2/D1) may be 4.8, 5, 10, 15, 20, 25, 30, 35, 40, 45, 50, 55 or a value falling within a range consisting of any two of the above values. By regulating a value of A x (D2/D1) to be within the range of this application, the sum of the mass percentages of the compound having sulfur-oxygen double bond and the nitrile compound is matched with the particle diameter of the positive active material to synergistically play a role in reducing the side reaction between the electrolyte solution on the positive electrode side and the positive electrode material layer and reducing the generation of the side-reaction products on the positive electrode side, thereby relieving the problem of the abnormal charging/discharging capacity ratio in the cycling process of the secondary battery.

In one implementation solution of this application, the positive active material has an average sphericity of S50, and 0.65 ≤ S50 ≤ 0.99. Exemplarily, S50 may be 0.65, 0.7, 0.75, 0.8, 0.85, 0.9, 0.95, 0.99, or a value falling within a range consisting of any two of the above values. By regulating a value of S50 to be within the range of this application, it helps to reduce the pressure between positive active material particles in the positive electrode material layer during cold pressing, reduce the degree of crushing of the positive active material particles, and reduce the occurrence of the side reaction between the electrolyte solution on the positive electrode side and the positive electrode material layer as well as the generation of the side-reaction products on the positive electrode side, thereby relieving the problem of the abnormal charging/discharging capacity ratio in the cycling process of the secondary battery.

This application has no particular limitation on the method for regulating the Dv10 and Dv50 of the positive active material as long as the purpose of this application can be achieved. Exemplarily, the Dv10 and Dv50 of the positive active material can be regulated by grinding the positive active material. For example, the Dv10 and Dv50 of the positive active material can be regulated by regulating the grinding time. Exemplarily, when other conditions remain unchanged, when the grinding time is prolonged, the Dv10 of the positive active material decreases, and the Dv50 of the positive active material decreases; and when the grinding time is shortened, the Dv10 of the positive active material increases and the Dv50 of the positive active material increases.

This application has no particular limitation on the method for regulating the average sphericity of the positive active material as long as the purpose of this application can be achieved. Exemplarily, the average sphericity of the positive active material can be regulated by changing the ball milling time, and the longer the ball milling time is, the larger the sphericity. For example, the ball milling time is prolonged, so the average sphericity increases; and the ball milling time is shortened, so the average sphericity decreases.

In this application, the electrolyte solution further includes a lithium salt. The lithium salt may include at least one of various lithium salts commonly used in the art, such as LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalato)borate (LiBOB), or lithium difluoroborate. Based on the total mass of the electrolyte solution, the lithium salt has a mass percentage A5 of 8% to 15%. For example, A5 may be 8, 9, 10, 11, 12, 13, 14, 15 or a value falling within a range consisting of any two of the above values.

In this application, the electrolyte solution further includes a non-aqueous solvent. This application has no particular limitation on the non-aqueous solvent as long as the purpose of this application can be achieved. For example, the non-aqueous solvent may include, but is not limited to, at least one of a carbonate compound, a carboxylate compound, an ether compound, or another organic solvent. The above carbonate compound may include, but is not limited to, at least one of a chained carbonate compound, a cyclic carbonate compound, or a fluorocarbonate compound. The above chained carbonate compound may include, but is not limited to, at least one of dimethyl carbonate (DMC), diethyl carbonate (DEC), dipropyl carbonate (DPC), methyl propyl carbonate (MPC), ethylene propylene carbonate (EPC), or methyl ethyl carbonate (EMC). The above cyclic carbonate compound may include, but is not limited to, at least one of ethylene carbonate (EC), propylene carbonate (PC), butylene carbonate (BC), or vinyl ethylene carbonate (VEC). The above fluorocarbonate compound may include, but is not limited to, at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethyl carbonate, 1-fluoro-1-methylethylene carbonate, 1,2-difluoro-1-methylethylene carbonate, 1,1,2-trifluoro-2-methylethylene carbonate, or trifluoromethyl ethylene carbonate. The above carboxylic acid compound may include, but is not limited to, at least one of methyl formate, methyl acetate, ethyl acetate, n-propyl acetate, tert-butyl acetate, methyl propionate, ethyl propionate, propyl propionate, γ-butyrolactone, decalactone, valerolactone, or caprolactone. The above ether compound may include, but is not limited to, at least one of dibutyl ether, tetraglyme, diethylene glycol dimethyl ether, 1,2-dimethoxyethane, 1,2-diethoxyethane, 1-ethoxy-1-methoxyethane, 2-methyltetrahydrofuran, or tetrahydrofuran. The above another organic solvent may include, but is not limited to, at least one of dimethyl sulfoxide, cyclopentene oxide, sulfolane, methyl sulfolane, 1,3-dimethyl-2-imidazolidinone, N-methyl-2-pyrrolidnone, dimethylformamide, acetonitrile, trimethyl phosphate, triethyl phosphate, or trioctyl phosphate. Based on the total mass of the electrolyte solution, the non-aqueous solvent has a mass percentage A6 of 56% to 89%. For example, A6 may be 56, 60, 65, 69, 70, 75, 80, 85, 87, 88, 89 or a value falling within a range consisting of any two of the above values.

In one implementation solution of this application, the electrolyte solution may include a lithium salt, a non-aqueous solvent, a compound having sulfur-oxygen double bond and a nitrile compound. Mass percentages of the lithium salt, the compound having sulfur-oxygen double bond and the nitrile compound are described above; and the non-aqueous solvent has a mass percentage of A6 %, 70% ≤ A6 ≤ 89%. The secondary battery including the above electrolyte solution has better cycling performance.

In one implementation solution of this application, the electrolyte solution may include a lithium salt, a non-aqueous solvent, a compound having sulfur-oxygen double bond, a nitrile compound and fluoroethylene carbonate. Mass percentages of the lithium salt, the compound having sulfur-oxygen double bond, the nitrile compound and the fluoroethylene carbonate are described above; and the non-aqueous solvent has a mass percentage of A6 %, 69% ≤ A6 ≤ 87%. The secondary battery including the above electrolyte solution has better cycling performance.

In one implementation solution of this application, the electrolyte solution may include a lithium salt, a non-aqueous solvent, a compound having sulfur-oxygen double bond, a nitrile compound and a compound of Formula (I). Mass percentages of the lithium salt, the compound having sulfur-oxygen double bond, the nitrile compound and the compound of Formula (I) are described above; and the non-aqueous solvent has a mass percentage of A6 %, 65% ≤ A6 ≤ 88%. The secondary battery including the above electrolyte solution has better cycling performance.

In one implementation solution of this application, the electrolyte solution may include a lithium salt, a non-aqueous solvent, a compound having sulfur-oxygen double bond, a nitrile compound, fluoroethylene carbonate and a compound of Formula (I). Mass percentages of the lithium salt, the compound having sulfur-oxygen double bond, the nitrile compound, the fluoroethylene carbonate and the compound of Formula (I) are described above; and the non-aqueous solvent has a mass percentage of A6 %, 56% ≤ A6 ≤ 87%. The secondary battery including the above electrolyte solution has better cycling performance.

In this application, the positive electrode plate includes a positive current collector and a positive electrode material layer disposed on at least one surface of the positive current collector. The above-mentioned "positive electrode material layer disposed on at least one surface of the positive current collector" means that the positive electrode material layer may be disposed on one surface of the positive current collector in a thickness direction thereof, and may also be disposed on two surfaces of the positive current collector in the thickness direction thereof. It should be noted that the "surface" here may be the whole area of the positive current collector, and may also be part of the area of the positive current collector, and this application has no particular limitation as long as the purpose of this application can be achieved. This application has no particular limitation on the positive current collector as long as the purpose of this application can be achieved. For example, aluminum foil, aluminum alloy foil or a composite current collector (such as an aluminum-carbon composite current collector), etc. may be included.

The positive electrode material layer of this application includes a positive active material. This application has no particular limitation on the positive active material as long as the purpose of this application can be achieved. For example, the positive active material may include at least one of lithium nickel cobalt manganate (e.g., common NCM811, NCM622, NCM523, and NCM111), lithium nickel cobalt aluminate, lithium iron phosphate, lithium and manganese-rich materials, lithium cobalt oxide (LiCoO₂), lithium manganate, lithium manganese iron phosphate, or lithium titanate. The positive electrode material layer may further include a conductive agent and a binder. This application has no particular limitation on types of the conductive agent as long as the purpose of this application can be achieved. For example, the conductive agent may include, but is not limited to, at least one of conductive carbon black (Super P), carbon nanotubes (CNTs), carbon fibers, flake graphite, graphene, metallic materials or a conducting polymer. The above carbon nanotubes may include, but are not limited to, single-walled carbon nanotubes and/or multi-walled carbon nanotubes. The above carbon fibers may include, but are not limited to, a vapor grown carbon fiber (VGCF) and/or a carbon nanofiber. The above metallic materials may include, but are not limited to, metal powder and/or metal fibers, and specifically, metal may include, but is not limited to, at least one of copper, nickel, aluminum or silver. The above conducting polymer may include, but is not limited to, at least one of a polyphenylene derivative, polyaniline, polythiophene, polyacetylene or polypyrrole. This application has no particular limitation on types of the binder as long as the purpose of this application can be achieved. For example, the binder may include, but is not limited to, at least one of polyacrylate, polyimide, polyamide, polyamideimide, polyvinylidene fluoride (PVDF), styrene, 1,3-butadiene polymer (styrene-butadiene rubber), sodium alginate, polyvinyl alcohol, polytetrafluoroethylene, polyacrylonitrile, sodium carboxymethyl cellulose, potassium carboxymethyl cellulose, sodium hydroxymethyl cellulose, or potassium hydroxymethyl cellulose. This application has no particular limitation on a mass ratio of the positive active material to the conductive agent to the binder in the positive electrode material layer and a person skilled in the art can select the mass ratio according to actual demands as long as the purpose of this application can be achieved.

This application has no particular limitation on the thickness of the positive current collector as long as the purpose of this application can be achieved. For example, the thickness of the positive current collector is from 5 µm to 20 µm. This application has no particular limitation on the thickness of the positive electrode plate as long as the purpose of this application can be achieved. For example, the thickness of the positive electrode plate is from 15 µm to 500 µm.

Optionally, the positive electrode plate may further include a conductive layer, and the conductive layer is disposed between the positive current collector and the positive electrode material layer. This application has no particular limitation on the composition of the conductive layer, which may be a conductive layer commonly used in the art. The conductive layer includes a conductive agent and a binder. This application has no particular limitation on the conductive agent and the binder in the conductive layer, which may be at least one of the above conductive agent and the above binder. This application has no particular limitation on the mass ratio of the conductive agent to the binder in the conductive layer, and a person skilled in the art may select the mass ratio according to actual demands, as long as the purpose of this application can be achieved.

In this application, the negative electrode plate includes a negative current collector and a negative electrode material layer disposed on at least one surface of the negative current collector. The above-mentioned "negative electrode material layer disposed on at least one surface of the negative current collector" means that the negative electrode material layer may be disposed on one surface of the negative current collector in a thickness direction thereof, and may also be disposed on two surfaces of the negative current collector in the thickness direction thereof. It should be noted that the "surface" here may be the whole area of the negative current collector, and may also be part of the area of the negative current collector, and this application has no particular limitation as long as the purpose of this application can be achieved. This application has no particular limitation on the negative current collector as long as the purpose of this application can be achieved. For example, copper foil, copper alloy foil, nickel foil, stainless steel foil, titanium foil, nickel foam, copper foam or a composite current collector, etc. may be included.

The negative electrode material layer of this application includes a negative active material. This application has no particular limitation on the negative active material as long as the purpose of this application can be achieved. For example, the negative active material may include at least one of natural graphite, artificial graphite, a mesophase carbon micro bead (MCMB), hard carbon, soft carbon, silicon, a silicon-carbon complex, SiOₓ (0.5 < x < 1.6), an Li-Sn alloy, an Li-Sn-O alloy, Sn, SnO, SnO₂, lithium titanate Li₄Ti₅O₁₂ of a spinel structure, an Li-Al alloy, or lithium metal. The negative electrode material layer of this application further includes a binder and a thickening agent. This application has no particular limitation on the binder and the thickening agent in the negative electrode material layer as long as the purpose of this application can be achieved. For example, the binder may be at least one of the above binders. The thickening agent may include, but is not limited to, sodium carboxymethyl cellulose. The negative electrode material layer of this application further includes a conductive agent. This application has no particular limitation on the conductive agent in the negative electrode material layer as long as the purpose of this application can be achieved. For example, the conductive agent may be at least one of the above conductive agents. This application has no particular limitation on a mass ratio of the negative active material to the binder to the thickening agent in the negative electrode material layer and a person skilled in the art can select the mass ratio according to actual demands as long as the purpose of this application can be achieved.

This application has no particular limitation on the thickness of the negative current collector as long as the purpose of this application can be achieved. For example, the thickness of the negative current collector is from 4 µm to 12 µm. This application has no particular limitation on the thickness of the negative electrode material layer as long as the purpose of this application can be achieved. For example, the thickness of the negative electrode material layer on one surface of the negative current collector is from 30 µm to 250 µm. This application has no particular limitation on the thickness of the negative electrode plate as long as the purpose of this application can be achieved. For example, the thickness of the negative electrode plate is from 30 µm to 500 µm.

Optionally, the negative electrode plate may further include a conductive layer, and the conductive layer is disposed between the negative current collector and the negative electrode material layer. This application has no particular limitation on the composition of the conductive layer, which may be a conductive layer commonly used in the art. The conductive layer includes a conductive agent and a binder. This application has no particular limitation on the conductive agent and the binder in the conductive layer, which may be at least one of the above conductive agent and the above binder. This application has no particular limitation on a mass ratio of the conductive agent to the binder in the conductive layer, and a person skilled in the art may select the mass ratio according to actual demands, as long as the purpose of this application can be achieved.

In this application, the separator is configured to separate the positive electrode plate from the negative electrode plate, prevent an internal short circuit of the secondary battery, allow electrolyte ions to pass through freely, and not affect an electrochemical charge and discharge process. This application has no particular limitation on the separator as long as the purpose of this application can be achieved. For example, a material of the separator may include, but is not limited to, at least one of polyolefin (PO) dominated by polyethylene (PE) and polypropylene (PP), polyester (e.g. a polyethylene terephthalate (PET) film), cellulose, polyimide (PI), polyamide (PA), spandex or aramid. The type of the separator may include at least one of a woven film, a non-woven film, a microporous film, a composite film, a calendered film, a spun film, etc.

In this application, the separator may include a substrate and a surface treatment layer. The substrate may be a non-woven fabric or a composite film with a porous structure, and a material of the substrate may include at least one of polyethylene, polypropylene, polyethylene terephthalate, or polyimide. Optionally, the substrate layer may use a polypropylene porous film, a polyethylene porous film, a polypropylene non-woven fabric, a polyethylene non-woven fabric, or a polypropylene-polyethylene-polypropylene porous composite film. Optionally, at least one surface of the substrate is provided with the surface treatment layer, and the surface treatment layer may be a polymer layer or an inorganic substance layer, or a layer formed by mixing a polymer and an inorganic substance. For example, the inorganic substance layer includes inorganic particles and a binder, and this application has no particular limitation on the inorganic particles, for example, the inorganic particles may include at least one of aluminum oxide, silicon oxide, magnesium oxide, titanium oxide, hafnium dioxide, tin oxide, cerium dioxide, nickel oxide, zinc oxide, calcium oxide, zirconia, yttrium oxide, silicon carbide, boehmite, aluminium hydroxide, magnesium hydroxide, calcium hydroxide, or barium sulfate. This application has no particular limitation on the above binder. For example, the binder may be at least one of the above binders. The polymer layer includes a polymer, and a material of the polymer includes at least one of polyamide, polyacrylonitrile, acrylate polymer, polyacrylic acid, polyvinylpyrrolidone, polyvinyl ether, polyvinylidene fluoride, or polyvinylidene fluoride-hexafluoropropylene.

The secondary battery of this application may further include a packaging bag for accommodating the positive electrode plate, the separator, the negative electrode plate and the electrolyte solution, as well as other components well known in the art in the secondary battery. This application has no particular limitation on the above other components. This application has no particular limitation on the packaging bag, which may be a packaging bag known in the art, as long as the purpose of this application can be achieved.

In this application, the secondary battery may include, but is not limited to: a lithium metal secondary battery, a lithium-ion secondary battery (a lithium-ion battery), a lithium polymer secondary battery, a lithium-ion polymer secondary battery, or the like.

The preparation process of the secondary battery of this application is well known to the person skilled in the field, and this application has no particular limitation. For example, the preparation process may include but is not limited to the following steps: stacking the positive electrode plate, the separator, and the negative electrode plate in order, winding, folding, and performing other operations as needed to obtain an electrode assembly of a wound structure, placing the electrode assembly into the packaging bag, injecting the electrolyte solution into the packaging bag and sealing the packaging bag, and obtaining the secondary battery; alternatively, stacking the positive electrode plate, the separator, and the negative electrode plate in order, and then fixing four corners of the entire stacked structure with adhesive tape to obtain an electrode assembly of a stacked structure, placing the electrode assembly into the packaging bag, injecting the electrolyte solution into the packaging bag and sealing the packaging bag, and obtaining the secondary battery. In addition, an overcurrent prevention element, a guide plate and the like can also be placed in the packaging bag as needed, thereby preventing pressure rise, overcharging and discharging inside the secondary battery. The packaging bag is a packaging bag known in the art, which is not limited by this application.

A second aspect of this application provides an electronic apparatus, including the secondary battery in any one of the foregoing implementation solutions. Therefore, the electronic apparatus provided by this application has good use performance.

This application has no particular limitation on types of the electronic apparatus, which may any electronic apparatus known in the prior art. In some embodiments, the electronic apparatus may include, but is not limited to, a notebook computer, pen-inputting computer, mobile computer, e-book player, portable phone, portable fax machine, portable photocopier, portable printer, head-mounted stereo headset, video recorder, liquid crystal display television set, handheld cleaner, portable CD player, mini CD-ROM, transceiver, electronic notepad, calculator, memory card, portable voice recorder, radio, backup power supply, electric motor, automobile, motorcycle, power-assisted bicycle, bicycle, lighting appliance, toy, game console, watch, electric tool, flashlight, camera, large household storage battery, lithium-ion capacitor and the like.

### Embodiment

In the following, implementations of this application are described more specifically by way of embodiments and comparative embodiments. Various tests and evaluations were conducted according to the following methods. In addition, "parts" and "%" are used as mass standards unless otherwise specified.

### Test methods and devices:

### Particle size test:

A particle sizer (instrument model: MasterSizer 2000) is used to test the particle diameters Dv10 and Dv50 of the positive active material. In the volume-based particle size distribution curve of the material, from the small-diameter side, the particle diameter of particles when the cumulative volume percent reaches 10% is Dv10, and the particle diameter of particles when the cumulative volume percent reaches 50% of the cumulative volume is Dv50.

### Average sphericity test:

The images of 100 particles are captured and processed using a Malvern automated image particle size analyzer (model: Morphologi 4-ID), then the microstructure and morphology of the particles are analyzed by Morphology Directed Raman Spectroscopy (MDRS) to obtain the longest and shortest diameters of all the particles, and a ratio of the shortest diameter to the longest diameter of each particle is calculated, and all the ratios are averaged to obtain the average sphericity S50 of the particles.

### Thickness test of a positive electrode material layer:

The lithium-ion batteries in embodiments and comparative embodiments are disassembled after being discharged to 2.8 V at a constant current of 0.5 C. The positive electrode plate is taken out and soaked in dimethyl carbonate (DMC) for 20 minutes, and then drenched with DMC and acetone each in turn. After that, the positive electrode plate is placed in an oven and baked at 85 °C for 12 hours to obtain the disassembled positive electrode plate sample. An ion polisher (IB-09010 CP) is used to polish the section along the thickness direction of the positive electrode plate to obtain a cross section of the positive electrode plate to produce a sample for scanning electron microscopy. The thickness of the positive electrode material layer is tested by scanning electron microscopy, and the thicknesses at five different locations of the positive electrode material layer are randomly tested, and an average value is calculated to obtain the thickness D of the positive electrode material layer.

### Testing of the content of each component in the electrolyte solution:

The lithium-ion batteries in embodiments and comparative embodiments are disassembled after being discharged to 2.8 V at a constant current of 0.5 C. The electrolyte solution is collected, and the disassembled positive electrode plate, negative electrode plate, and separator are centrifuged. The liquid obtained after centrifugation and the above electrolyte solution are mixed evenly, and then tested with a gas chromatograph-mass spectrometer (instrument model: Agilent 8890) and an ion chromatograph (instrument model: AQUION Ion Chromatography). Components in the electrolyte solution are obtained and contents thereof are tested.

### Test of C/D in a cycling process:

Under the condition of 45 °C, the lithium-ion batteries are charged to 3.0 V at a constant current of 0.5 C, stand for 5 min, then are charged to 4.25 V at a constant current of 1.2 C and to a current of 0.7 C at a constant voltage of 4.25 V, and then are charged to 4.5 V at a constant current of 0.7 C and to a current of 0.05 C at a constant voltage of 4.5 V, which is the first charging, and the charging capacity C0 of the first charging is recorded. After standing for 5 min, the lithium-ion batteries are discharged to 3.0 V at a constant current of 0.5 C, which is the first discharging, and the discharging capacity D0 of the first discharging is recorded. One cycle is completed at this time. 200 cycles are performed on the lithium-ion batteries according to the above conditions, and the charging capacity, the discharging capacity and a ratio C/D of the charging capacity to the discharging capacity of each cycle are recorded. The maximum value (C/D)ₘₐₓ in C/D in 200 cycles of the lithium-ion batteries is taken as an indicator for evaluating C/D of the lithium-ion batteries.

The value of C/D usually reflects the magnitude of capacity loss and the degree of self-discharge in the cycling process. Due to irreversible capacity loss, the value of C/D is usually greater than 1. If there are shuttle or transition metal dendrites triggering self-discharge, it will lead to an increase in charging capacity and a decrease in discharging capacity, resulting in an increase in the C/D ratio. (C/D)ₘₐₓ can be used as a criterion to determine whether there is an abnormal charging/discharging capacity ratio in the cycling process of the lithium-ion batteries, and the closer the (C/D)ₘₐₓ is to 1, the better the performance of the lithium-ion batteries is. (C/D)ₘₐₓ ≤ 1.05 indicates that the risk of cycling abnormality is low; and (C/D)ₘₐₓ > 1.05 indicates that the risk of the abnormal charging/discharging capacity ratio is high.

### Embodiment 1-1

### <Preparation of an electrolyte solution>

In an argon atmosphere glove box with a water content less than 10 ppm, mixing EC, PC and DEC according to a mass ratio of 10: 30: 60 to obtain a basic solvent, and then adding a lithium salt LiPF₆, 1,3-propanesultone (1,3-PS) as a compound having sulfur-oxygen double bond, and adipic dinitrile (ADN), succinonitrile (SN) and 1,3,6-hexanetricarbonitrile (HTCN) which are used as a nitrile compound into the above basic solvent, and uniformly stirring to obtain an electrolyte solution, where based on the total mass of the electrolyte solution, the LiPF₆ has a mass percentage A5 of 12%, the compound having sulfur-oxygen double bond has a mass percentage A1 of 0.52%, the nitrile compound has a mass percentage A2 of 6.5%, and the balance is the basic solvent.

### <Preparing a positive electrode plate>

Performing ball milling on LiCoO₂ for 12 h to obtain a positive active material LiCoO₂ with an average sphericity S50 of 0.9.

Mixing the positive active material LiCoO₂, conductive carbon black as a conductive agent and PVDF as a binder according to a mass ratio of 95: 2: 3, and adding N-methyl pyrrolidone (NMP) and uniformly stirring under the action of a vacuum mixer, to obtain a positive slurry with a solid content of 70 wt%. Uniformly coating one surface of a positive current collector aluminum foil with a thickness of 9 µm with the positive slurry, and drying at 85 °C for 4 h, to obtain a positive electrode plate with a single face coated with the positive electrode material layer, where the thickness of the coating is 110 µm and the width of the coating is 74 mm. Repeating the above steps on the other surface of the aluminum foil, so as to obtain the positive electrode plate with double faces coated with the positive electrode material layer. Then, cold pressing, slicing and slitting to obtain the positive electrode plate of 74 mm × 867 mm, where the values of D and A/D are shown in Table 1; the particle diameter Dv10 (i.e., D1) of the positive active material is 3, the particle diameter Dv50 (i.e., D2) of the positive active material is 12, the D2/D1 is 4, and the A × (D2/D1) is 28.4.

### <Preparing a negative electrode plate>

Mixing artificial graphite as a negative active material, styrene-butadiene rubber as a binder, and sodium carboxymethylcellulose as a thickening agent according to a mass ratio of 95: 2: 3, adding deionized water, and uniformly stirring the mixture under the action of a vacuum mixer, to obtain a negative slurry with a solid content of 75 wt%. Uniformly coating one surface of a negative current collector copper foil with a thickness of 12 µm with the negative slurry, and drying at 85 °C for 4 h, to obtain a negative electrode plate with a single face coated with the negative electrode material layer, where the thickness of the coating is 130 µm and the width of the coating is 76.6 mm. Repeating the above steps on the other surface of the copper foil, so as to obtain the negative electrode plate with double faces coated with the negative electrode material layer. Then, cold pressing, slicing and slitting to obtain the negative electrode plate of 76.6 mm × 875 mm.

### <Preparation of a separator>

Mixing PVDF as a binder and aluminum oxide as inorganic particles according to a mass ratio of 1: 2, adding NMP as a solvent, blending the mixture into an inorganic substance layer slurry with a solid content of 12 wt%, uniformly stirring the inorganic substance layer slurry, uniformly coating one surface of a polyethylene substrate with a thickness of 5 µm with the inorganic substance layer slurry, and drying at 85 °C for 4 h, to obtain a separator with a single face coated with an inorganic substance layer, where the thickness of the coating is 2 µm. Then, adding PVDF into an NMP solvent and uniformly stirring, blending the mixture into a polymer layer slurry with a solid content of 25 wt%, then uniformly coating the surface of the inorganic substance layer with the polymer layer slurry, the density of the surface coated with the polymer layer slurry being 0.15 mg/cm², and then drying at 85 °C for 4 h. Finally, uniformly coating the other surface of the polyethylene substrate with the polymer layer slurry, the density of the surface coated with the polymer layer slurry being 0.15 mg/cm², and then drying at 85 °C for 4 h, to obtain the separator with one face coated with the inorganic substance layer and the polymer layer and the other face coated with only the polymer layer.

### <Preparation of a lithium-ion battery>

Properly and sequentially stacking the positive electrode plate, the separator and the negative electrode plate prepared above, such that the face coated with the inorganic substance layer and the polymer layer in the separator faces the positive electrode plate, the face coated with only the polymer layer faces the negative electrode plate, so the separator is located between the positive electrode plate and the negative electrode plate to play a role in isolation, and then, winding to obtain an electrode assembly. After tabs are welded, putting the electrode assembly into an aluminum-plastic film packaging bag, putting the bag in a vacuum oven at 85 °C, and drying for 12 h to remove moisture, injecting the above prepared electrolyte solution, and performing procedures such as vacuum packaging, standing, chemical formation (charging to 3.5 V at a constant current of 0.02 C and charging to 3.9 V at a constant current of 0.1 C), and shaping obtain a lithium-ion battery.

### Embodiment 1-2 to Embodiment 1-34

Identical to Embodiment 1-1 except that the relevant preparation parameters are adjusted according to Table 1, where as the mass percentages of a compound having sulfur-oxygen double bond and a nitrile compound added change, the mass percentage of a basic solvent also changes, and a mass ratio of EC to PC to DEC and the mass percentage of a lithium salt are unchanged.

### Embodiment 2-1 to Embodiment 2-8

Identical to Embodiment 1-6 except that fluoroethylene carbonate is added as shown in Table 2 and the relevant preparation parameters are adjusted according to Table 2, where as the mass percentages of the fluoroethylene carbonate, a compound having sulfur-oxygen double bond and a nitrile compound added change, the mass percentage of a basic solvent also changes, and a mass ratio of EC to PC to DEC and the mass percentage of a lithium salt are unchanged.

### Embodiment 3-1 to Embodiment 3-11

Identical to Embodiment 1-6 except that a compound of Formula (I) is added as shown in Table 3 and the relevant preparation parameters are adjusted according to Table 3, where as the mass percentages of the compound of Formula (I), a compound having sulfur-oxygen double bond and a nitrile compound added change, the mass percentage of a basic solvent also changes, and a mass ratio of EC to PC to DEC and the mass percentage of a lithium salt are unchanged.

### Embodiment 3-12

Identical to Embodiment 1-6 except that fluoroethylene carbonate and a compound of Formula (I) are added as shown in Table 3 and the relevant preparation parameters are adjusted according to Table 3. The mass percentage of a basic solvent also changes after the fluoroethylene carbonate and the compound of Formula (I) are added, and a mass ratio of EC to PC to DEC and the mass percentage of a lithium salt in the basic solvent are unchanged.

### Embodiment 4-1 to Embodiment 4-10

Identical to Embodiment 3-12 except that the relevant preparation parameters are adjusted according to Table 4.

### Embodiment 4-11 to Embodiment 4-13

Identical to Embodiment 3-12 except that the ball milling time is adjusted to make an average sphericity S50 of a positive active material be as shown in Table 4.

### Comparative Embodiment 1 to Comparative Embodiment 11

Identical to Embodiment 1-1 except that the relevant preparation parameters are adjusted according to Table 1.

The preparation parameters and electrical performance parameters of the embodiments and the comparative embodiments are shown in Table 1 to Table 4.

**Table 1**

| | sulfur-oxygen double-bond compound | A1 (%) | Nitrile compound | A2 (%) | A (%) | A1/A2 | D (µm) | A/D | (C/D)ₘₐₓ |
|---|---|---|---|---|---|---|---|---|---|
| Embodiment 1-1 | 1,3-PS | 0.52 | 2.5%ADN+2%SN +2%HTCN | 6.5 | 7.02 | 0.08 | 50 | 0.141 | 1.018 |
| Embodiment 1-2 | 1,3-PS | 4 | 1%ADN+1%SN +2%HTCN | 4 | 8 | 1 | 50 | 0.16 | 1.015 |
| Embodiment 1-3 | 1,3-PS | 5 | SN | 2.5 | 7.5 | 2 | 50 | 0.15 | 1.019 |
| Embodiment 1-4 | 1,3-PS | 4.3 | SN | 2 | 6.3 | 2.15 | 50 | 0.126 | 1.022 |
| Embodiment 1-5 | 1,3-PS | 0.5 | SN | 2.5 | 3 | 0.2 | 30 | 0.1 | 1.032 |
| Embodiment 1-6 | 1,3-PS | 4 | 1%ADN+2.5%SN +2.5%HTCN | 6 | 10 | 0.67 | 50 | 0.2 | 1.013 |
| Embodiment 1-7 | 1,3-PS | 5.2 | 3%SN+3%ADN +3.8%HTCN | 9.8 | 15 | 0.53 | 50 | 0.3 | 1.038 |
| Embodiment 1-8 | 1,3-PS | 2 | SN | 2 | 4 | 1 | 50 | 0.08 | 1.03 |
| Embodiment 1-9 | 1,3-PS | 5 | 2.5%SN+2.5%HT CN | 5 | 10 | 1 | 30 | 0.33 | 1.016 |
| Embodiment 1-10 | 1,3-PS | 4.4 | 1%SN+1%ADN+ 2%HTCN | 4 | 8.4 | 1.1 | 20 | 0.42 | 1.015 |
| Embodiment 1-11 | 1,3-PS | 0.5 | 2%SN+3%ADN | 5 | 5.5 | 0.1 | 50 | 0.11 | 1.029 |
| Embodiment 1-12 | 1,3-PS | 5.2 | 3% SN + 3% ADN + 3.8% HTCN | 9.8 | 15 | 0.53 | 50 | 0.3 | 1.04 |
| Embodiment 1-13 | 1,3-PS | 5.2 | SN | 2.4 | 7.6 | 2.2 | 50 | 0.152 | 1.018 |
| Embodiment 1-14 | 1,3-PS | 5.2 | 2%SN+3%ADN+ 3.1%HTCN | 8.1 | 13.3 | 0.6 | 50 | 0.266 | 1.016 |
| Embodiment 1-15 | 1,3-PS | 2 | 1% SN + 1% ADN + 2% HTCN | 4 | 6 | 0.5 | 15 | 0.4 | 1.015 |
| Embodiment 1-16 | 1,3-PS | 2 | 1% SN + 1% ADN + 2% HTCN | 4 | 6 | 0.5 | 60 | 0.1 | 1.024 |
| Embodiment 1-17 | Ethylene sulfate | 4.4 | 1% SN + 1% ADN + 2% HTCN | 4 | 8.4 | 1.1 | 20 | 0.42 | 1.015 |
| Embodiment 1-18 | Prop-1-ene-1, 3-sultone | 4.4 | 1% SN + 1% ADN + 2% HTCN | 4 | 8.4 | 1.1 | 20 | 0.42 | 1.014 |
| Embodiment 1-19 | Compound S | 4.4 | 1% SN + 1% ADN + 2% HTCN | 4 | 8.4 | 1.1 | 20 | 0.42 | 1.014 |
| Embodiment 1-20 | 1,3-PS | 4.4 | 1,3,5-pentane tricarbonitrile | 4 | 8.4 | 1.1 | 20 | 0.42 | 1.016 |
| Embodiment 1-21 | 1,3-PS | 4.4 | heptanedinitrile ,4-(2-cyanoethyl)- | 4 | 8.4 | 1.1 | 20 | 0.42 | 1.015 |
| Embodiment 1-22 | 1,3-PS | 4.4 | 1,2,3-tris(2-cyano ethoxy)propane | 4 | 8.4 | 1.1 | 20 | 0.42 | 1.017 |
| Embodiment 1-23 | 1,3-PS | 1 | SN | 2 | 3 | 0.5 | 20 | 0.15 | 1.049 |
| Embodiment 1-24 | 1,3-PS | 2.2 | 1,2,3-tris(2-cyano ethoxy)propane | 2 | 4.2 | 1.1 | 10 | 0.42 | 1.041 |
| Embodiment 1-25 | 1,3-PS | 4.4 | 1,2,3-tris(2-cyano ethoxy)propane | 4 | 8.4 | 1.1 | 70 | 0.12 | 1.045 |
| Embodiment 1-26 | 1,3-PS | 4.4 | 1% SN + 1% ADN + 2% HTCN | 4 | 8.4 | 1.1 | 50 | 0.168 | 1.02 |
| Embodiment 1-27 | 1,3-PS | 4.4 | 1% SN + 1% ADN + 2% HTCN | 2.4 | 6.8 | 1.83 | 50 | 0.136 | 1.022 |
| Embodiment 1-28 | 1,3-PS | 4.4 | 1% SN + 1% ADN + 2% HTCN | 8.1 | 12.5 | 0.54 | 50 | 0.25 | 1.017 |
| Embodiment 1-29 | 1,3-PS | 0.5 | 1% SN + 1% ADN + 2% HTCN | 4 | 4.5 | 0.125 | 50 | 0.09 | 1.024 |
| Embodiment 1-30 | 1,3-PS | 5.2 | 1% SN + 1% ADN + 2% HTCN | 4 | 9.2 | 1.3 | 50 | 0.184 | 1.016 |
| Embodiment 1-31 | 2.2%1,3-PS + 2.2%ethylene sulfate | 4.4 | 1% SN + 1% ADN + 2% HTCN | 4 | 8.4 | 1.1 | 50 | 0.168 | 1.021 |
| Embodiment 1-32 | 1,3-PS | 4.4 | 2% ADN + 2% ethylene glycol bis(propionitrile) ether | 4 | 8.4 | 1.1 | 50 | 0.168 | 1.015 |
| Embodiment 1-33 | Ethylene sulfate | 4.4 | 2% ADN + 2% ethylene glycol bis(propionitrile) ether | 4 | 8.4 | 1.1 | 50 | 0.168 | 1.018 |
| Embodiment 1-34 | 2.2%1,3-PS + 2.2%ethylene sulfate | 4.4 | 2% ADN + 2% ethylene glycol bis(propionitrile) ether | 4 | 8.4 | 1.1 | 50 | 0.168 | 1.019 |
| Comparative Embodiment 1 | / | / | / | / | / | / | 50 | / | 1.123 |
| Comparative Embodiment 2 | / | / | 1% SN + 1% ADN + 2% HTCN | 4 | 4 | / | 50 | 0.08 | 1.103 |
| Comparative Embodiment 3 | 1,3-PS | 4.4 | / | / | 4.4 | / | 50 | 0.088 | 1.109 |
| Comparative Embodiment 4 | 1,3-PS | 0.6 | 1%SN+5%ADN +2%HTCN | 8 | 8.6 | 0.075 | 50 | 0.172 | 1.083 |
| Comparative Embodiment 5 | 1,3-PS | 5.2 | SN | 2.4 | 7.6 | 2.17 | 50 | 0.152 | 1.088 |
| Comparative Embodiment 6 | 1,3-PS | 6.2 | SN | 2 | 8.2 | 3.1 | 50 | 0.164 | 1.093 |
| Comparative Embodiment 7 | 1,3-PS | 1 | SN | 1 | 2 | 1 | 50 | 0.04 | 1.118 |
| Comparative Embodiment 8 | 1,3-PS | 5 | 3%SN + 5%ADN + 4%HTCN + 3%1,2,3-tris(2-cya noethoxy)propane | 15 | 20 | 0.33 | 50 | 0.4 | 1.069 |
| Comparative Embodiment 9 | 1,3-PS | 0.5 | SN | 2.5 | 3 | 0.2 | 50 | 0.06 | 1.093 |
| Comparative Embodiment 10 | 1,3-PS | 5 | 2.5% SN + 2.5% HTCN | 5 | 10 | 1 | 20 | 0.5 | 1.077 |
| Comparative Embodiment 11 | 1,3-PS | 5 | 2.5% SN + 2.5% HTCN | 5 | 10 | 1 | 10 | 1 | 1.083 |

| | | | | | | | | | |
|---|---|---|---|---|---|---|---|---|---|
| Note: "/" in Table 1 indicates that the relevant preparation parameter is not present, and a compound S is 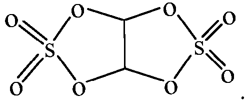 | | | | | | | | | |

Referring to Table 1, from Embodiment 1-1 to Embodiment 1-34 and Comparative Embodiment 1 to Comparative Embodiment 11, it can be seen that the electrolyte solution includes a compound having sulfur-oxygen double bond and a nitrile compound, by regulating the mass ratio A1/A2 and the sum A of the masses of the compound having sulfur-oxygen double bond and the nitrile compound, and the ratio A/D of the sum of the masses of the compound having sulfur-oxygen double bond and the nitrile compound to the thickness of the positive electrode material layer to be within the range of this application, the maximum value (C/D)ₘₐₓ of C/D in 200 cycles of the lithium-ion battery is lower, which means that the problem of the abnormal charging/discharging capacity ratio in the cycling process of the secondary battery can be relieved. In Comparative Embodiment 1 to Comparative Embodiment 11, the maximum value (C/D)ₘₐₓ of C/D in 200 cycles of the lithium-ion battery is higher, which means that there is a problem of the abnormal charging/discharging capacity ratio in the cycling process of the lithium-ion battery.

The mass percentage A1 of the compound having sulfur-oxygen double bonds and the mass percentage A2 of the nitrile compound usually also affect the level of the charging/discharging capacity ratio in the cycling process of the lithium-ion battery. As can be seen from Embodiment 1-1 to Embodiment 1-14, and Embodiment 1-26 to Embodiment 1-30, by regulating the values of A1 and A2 to be within the range of this application, the maximum value (C/D)ₘₐₓ of C/D in 200 cycles of the lithium-ion battery is lower, which means that the problem of the abnormal charging/discharging capacity ratio in the cycling process of the lithium-ion battery can be relieved.

The thickness D of the positive electrode material layer usually affects the cycling performance and energy density of the lithium-ion battery. As can be seen from Embodiment 1-1, Embodiment 1-15 to Embodiment 1-16, and Embodiment 1-24 to Embodiment 1-25, by regulating the value of D to be within the range of this application, the maximum value (C/D)ₘₐₓ of C/D in 200 cycles of the lithium-ion battery is lower, which means that the cycling performance of the lithium-ion battery is better.

The type of the compound having sulfur-oxygen double bond usually also affects the level of the charging/discharging capacity ratio in the cycling process of the lithium-ion battery. As can be seen from Embodiment 1-10, Embodiment 1-17 to Embodiment 1-19, and Embodiment 1-31, by regulating the type of the compound having sulfur-oxygen double bond to be within the range of this application, the maximum value (C/D)ₘₐₓ of C/D in 200 cycles of the lithium-ion battery is lower, which means that the problem of the abnormal charging/discharging capacity ratio in the cycling process of the lithium-ion battery can be relieved.

The type of the nitrile compound usually also affects the level of the charging/discharging capacity ratio in the cycling process of the lithium-ion battery. As can be seen from Embodiment 1-10, Embodiment 1-20 to Embodiment 1-22, and Embodiment 1-32 to Embodiment 1-34, by regulating the type of the nitrile compound to be within the range of this application, the maximum value (C/D)ₘₐₓ of C/D in 200 cycles of the lithium-ion battery is lower, which means that the problem of the abnormal charging/discharging capacity ratio in the cycling process of the lithium-ion battery can be relieved.

**Table 2**

| | A1(%) | A2(%) | A(%) | A3(%) | A/A3 | (C/D)ₘₐₓ |
|---|---|---|---|---|---|---|
| Embodiment 1-6 | 4 | 6 | 10 | / | / | 1.013 |
| Embodiment 2-1 | 3 | 6 | 9 | 1.8 | 5 | 1.011 |
| Embodiment 2-2 | 4 | 6 | 10 | 5 | 2 | 1.01 |
| Embodiment 2-3 | 4 | 6 | 10 | 9.8 | 1.02 | 1.008 |
| Embodiment 2-4 | 1 | 3 | 4 | 8 | 0.5 | 1.009 |
| Embodiment 2-5 | 3.5 | 6.5 | 10 | 4 | 2.5 | 1.007 |
| Embodiment 2-6 | 5 | 8 | 13 | 2.5 | 5.2 | 1.008 |
| Embodiment 2-7 | 0.6 | 2.4 | 3 | 7.5 | 0.4 | 1.011 |
| Embodiment 2-8 | 5 | 10 | 15 | 2.5 | 6 | 1.012 |

| | | | | | | |
|---|---|---|---|---|---|---|
| Note: "/" in Table 2 indicates that the relevant preparation parameter is not present. | | | | | | |

The electrolyte solution further includes fluoroethylene carbonate and the mass percentage A3 of the fluoroethylene carbonate usually also affects the level of the charging/discharging capacity ratio in the cycling process of the lithium-ion battery. As can be seen from Embodiment 1-6, and Embodiment 2-1 to Embodiment 2-3, by regulating the electrolyte solution to further include the fluoroethylene carbonate and the valve of A3 to be within the range of this application, the maximum value (C/D)ₘₐₓ of C/D in 200 cycles of the lithium-ion battery is lower, which means that the problem of the abnormal charging/discharging capacity ratio in the cycling process of the lithium-ion battery can be relieved.

A/A3 usually also affects the level of the charging/discharging capacity ratio in the cycling process of the lithium-ion battery. As can be seen from Embodiment 1-6, and Embodiment 2-1 to Embodiment 2-8, by regulating the value of A/A3 to be within the range of this application, the maximum value (C/D)ₘₐₓ of C/D in 200 cycles of the lithium-ion battery is lower, which means that the problem of the abnormal charging/discharging capacity ratio in the cycling process of the lithium-ion battery can be relieved.

**Table 3**

| | Compound of Formula I | A4(%) | A3(%) | A/A3 | (C/D)ₘₐₓ |
|---|---|---|---|---|---|
| Embodiment 1-6 | / | / | / | / | 1.013 |
| Embodiment 3-1 | Formula (I-1) | 0.5 | / | / | 1.011 |
| Embodiment 3-2 | Formula (I-4) | 0.5 | / | / | 1.01 |
| Embodiment 3-3 | Formula (I-7) | 0.5 | / | / | 1.008 |
| Embodiment 3-4 | Formula (I-8) | 0.5 | / | / | 1.01 |
| Embodiment 3-5 | Formula (I-9) | 0.5 | / | / | 1.011 |
| Embodiment 3-6 | Formula (I-11) | 0.5 | / | / | 1.009 |
| Embodiment 3-7 | Formula (I-7) | 0.01 | / | / | 1.012 |
| Embodiment 3-8 | Formula (I-7) | 2.5 | / | / | 1.009 |
| Embodiment 3-9 | Formula (I-7) | 5 | / | / | 1.012 |
| Embodiment 3-10 | Formula (I-7) | 0.1 | / | / | 1.011 |
| Embodiment 3-11 | Formula (I-7) | 3 | / | / | 1.010 |
| Embodiment 3-12 | Formula (I-7) | 0.5 | 5 | 2 | 1.006 |

| | | | | | |
|---|---|---|---|---|---|
| Note: "/" in Table 3 indicates that the relevant preparation parameter is not present. | | | | | |

The electrolyte solution further includes a compound of Formula (I) and the mass percentage A4 of the compound of Formula (I) usually also affects the level of the charging/discharging capacity ratio in the cycling process of the lithium-ion battery. As can be seen from Embodiment 1-6, and Embodiment 3-7 to Embodiment 3-11, by regulating the electrolyte solution to further include the compound of Formula (I) and the valve of A4 to be within the range of this application, the maximum value (C/D)ₘₐₓ of C/D in 200 cycles of the lithium-ion battery is lower, which means that the problem of the abnormal charging/discharging capacity ratio in the cycling process of the lithium-ion battery can be relieved.

The type of the compound of Formula (I) usually also affects the level of the charging/discharging capacity ratio in the cycling process of the lithium-ion battery. As can be seen from Embodiment 1-6, and Embodiment 3-1 to Embodiment 3-6, by regulating the type of the compound of Formula (I) to be within the range of this application, the maximum value (C/D)ₘₐₓ of C/D in 200 cycles of the lithium-ion battery is lower, which means that the problem of the abnormal charging/discharging capacity ratio in the cycling process of the lithium-ion battery can be relieved.

As can be seen from Embodiment 3-12, the electrolyte solution includes fluoroethylene carbonate and a compound of Formula (I), and the maximum value (C/D)ₘₐₓ of C/D in 200 cycles of the lithium-ion battery is lower, which means that the problem of the abnormal charging/discharging capacity ratio in the cycling process of the lithium-ion battery can be better relieved.

**Table 4**

| | D1 (µm) | D2(µm) | D2/D1 | A1(%) | A2(%) | A(%) | A×(D2/ D1) | S50 | (C/D)ₘₐₓ |
|---|---|---|---|---|---|---|---|---|---|
| Embodiment 3-12 | 3 | 12 | 4 | 4 | 6 | 10 | 40 | 0.9 | 1.006 |
| Embodiment 4-1 | 2.4 | 11.5 | 4.8 | 4 | 6 | 10 | 47.9 | 0.9 | 1.007 |
| Embodiment 4-2 | 4 | 8.2 | 2.05 | 4 | 6 | 10 | 20.5 | 0.9 | 1.007 |
| Embodiment 4-3 | 5.5 | 11 | 2 | 4 | 6 | 10 | 20 | 0.9 | 1.006 |
| Embodiment 4-4 | 3 | 4.5 | 1.5 | 4 | 6 | 10 | 15 | 0.9 | 1.005 |
| Embodiment 4-5 | 2.7 | 8.1 | 3 | 4 | 6 | 10 | 30 | 0.9 | 1.007 |
| Embodiment 4-6 | 2.4 | 12 | 5 | 4 | 6 | 10 | 50 | 0.9 | 1.004 |
| Embodiment 4-7 | 6 | 9.6 | 1.6 | 1 | 2 | 3 | 4.8 | 0.9 | 1.012 |
| Embodiment 4-8 | 5.4 | 9 | 1.67 | 5 | 8.1 | 13.1 | 21.9 | 0.9 | 1.005 |
| Embodiment 4-9 | 5.5 | 27.5 | 5 | 5 | 6 | 11 | 55 | 0.9 | 1.009 |
| Embodiment 4-10 | 3 | 4.5 | 1.5 | 3 | 3.6 | 6.7 | 10.1 | 0.9 | 1.008 |
| Embodiment 4-11 | 2.4 | 12 | 5 | 4 | 6 | 10 | 50 | 0.65 | 1.008 |
| Embodiment 4-12 | 2.4 | 12 | 5 | 4 | 6 | 10 | 50 | 0.8 | 1.006 |
| Embodiment 4-13 | 2.4 | 12 | 5 | 4 | 6 | 10 | 50 | 0.99 | 1.002 |

The particle diameter Dv10 (i.e., D1) of the positive active material, and the ratio of the particle diameter Dv50 (i.e., D2) of the positive active material to the Dv10 of the positive active material usually also affect the level of the charging/discharging capacity ratio in the cycling process of the lithium-ion battery. As can be seen from Embodiment 3-12, and Embodiment 4-1 to Embodiment 4-6, by regulating the values of D1 and D2/D1 to be within the range of this application, the maximum value (C/D)ₘₐₓ of C/D in 200 cycles of the lithium-ion battery is lower, which means that the problem of the abnormal charging/discharging capacity ratio in the cycling process of the lithium-ion battery can be relieved.

The value of A × (D2/D1) usually also affects the level of the charging/discharging capacity ratio in the cycling process of the lithium-ion battery. As can be seen from Embodiment 3-12, and Embodiment 4-1 to Embodiment 4-10, by regulating the value of A × (D2/D1) to be within the range of this application, the maximum value (C/D)ₘₐₓ of C/D in 200 cycles of the lithium-ion battery is lower, which means that the problem of the abnormal charging/discharging capacity ratio in the cycling process of the lithium-ion battery can be relieved.

The average sphericity S50 of the positive active material usually also affects the level of the charging/discharging capacity ratio in the cycling process of the lithium-ion battery. As can be seen from Embodiment 3-12, and Embodiment 4-11 to Embodiment 4-13, by regulating the value of S50 to be within the range of this application, the maximum value (C/D)ₘₐₓ of C/D in 200 cycles of the lithium-ion battery is lower, which means that the problem of the abnormal charging/discharging capacity ratio in the cycling process of the lithium-ion battery can be relieved.

It should be noted that, the terms "include", "contain", or any other variation thereof are intended to cover non-exclusive inclusion, so that a process, method or article that includes a series of elements includes not only those elements, but also other elements that are not expressly listed, or further includes elements inherent to such process, method or article.

The embodiments of this specification use relevant manners for description. The same or similar parts of the embodiments may refer to each other, and each embodiment highlights the differences from other embodiments.

The above description is only the preferred embodiment of this application and is not be used to limit this application. Any modifications, equivalent replacements, improvements, etc. made within the spirit and principle of this application are to be included within the scope of protection of this application.

## Claims

1. A secondary battery, comprising a positive electrode plate, a negative electrode plate, a separator and an electrolyte solution, **characterized in that**, the electrolyte solution comprises a compound having sulfur-oxygen double bond and a nitrile compound, based on a total mass of the electrolyte solution, a mass percentage of the compound having sulfur-oxygen double bond is A1 %, a mass percentage of the nitrile compound is A2 %, and 0.08 ≤ A1/A2 ≤ 2.15; a sum of the mass percentages of the compound having sulfur-oxygen double bond and the nitrile compound is A%, and 3 ≤ A ≤ 15; and
the positive electrode plate comprises a positive current collector and a positive electrode material layer disposed on at least one surface of the positive current collector, a thickness of the positive electrode material layer is D µm, 0.08 ≤ A/D ≤ 0.42.

2. The secondary battery according to claim 1, **characterized in that**, 0.142 ≤ A/D ≤ 0.42.

3. The secondary battery according to claim 1 or 2, **characterized in that**, 0.5 ≤ A1 ≤ 5.2 and 2.4 ≤ A2 ≤ 8.1.

4. The secondary battery according to any one of claims 1 to 3, **characterized in that**, 15 ≤ D ≤ 60.

5. The secondary battery according to any one of claims 1 to 4, **characterized in that**, the compound having sulfur-oxygen double bond comprises at least one selected from the group consisting of 1,3-propanesultone, ethylene sulfate, prop-1-ene-1,3-sultone, 3-fluoro-1,3-propane sultone, 1,2-propanesultone, 1,4-butane sultone, 2,4-butane sultone, or 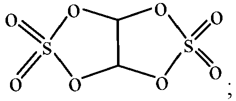 and
the nitrile compound comprises at least one selected from the group consisting of malononitrile, succinonitrile, glutaronitrile, adipic dinitrile, pimelic dinitrile, suberonitrile, 3,3'-oxy dipropanenitrile, 2-hexenedinitrile, fumaronitrile, 2-pentenedinitrile, 2-methylglutaronitrile, 4-cyanoheptanedinitrile, (Z)-1,2-dicyanoethylene, 2,2,3,3-tetrafluorosuccinonitrile, ethylene glycol bis(propionitrile) ether, 1,3,6-hexanetricarbonitrile, 1,3,5-pentanetricarbonitrile, heptanedinitrile,4-(2-cyanoethyl)-, or 1,2,3-tris(2-cyanoethoxy)propane.

6. The secondary battery according to any one of claims 1 to 5, **characterized in that**, the compound having sulfur-oxygen double bond comprises at least one selected from the group consisting of 1,3-propanesultone or ethylene sulfate, and the electrolyte solution further comprises adipic dinitrile, succinonitrile and 1,3,6-hexanetricarbonitrile.

7. The secondary battery according to any one of claims 1 to 5, **characterized in that**, the compound having sulfur-oxygen double bond comprises at least one selected from the group consisting of 1,3-propanesultone or ethylene sulfate, and the electrolyte solution further comprises adipic dinitrile and ethylene glycol bis(propionitrile) ether.

8. The secondary battery according to any one of claims 1 to 7, **characterized in that**, the electrolyte solution further comprises a fluoroethylene carbonate, based on the total mass of the electrolyte solution, a mass percentage of the fluoroethylene carbonate is A3 %, and 1.8 ≤ A3 ≤ 9.8.

9. The secondary battery according to claim 8, **characterized in that**, 0.5 ≤ A/A3 ≤ 5.2.

10. The secondary battery according to any one of claims 1 to 9, **characterized in that**, the electrolyte solution further comprises a compound of formula (I): 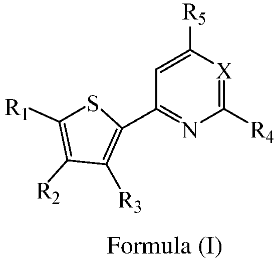
wherein X is selected from CR₆ or N;
R₁, R₂ and R₃ are each independently selected from a hydrogen atom, a halogen, a C₂ to C₅ carbonyl group, a C₁ to C₅ aldehyde group, an unsubstituted or Ra-substituted C₁ to C₅ alkyl group, an unsubstituted or Ra-substituted C₂ to Csalkenyl group, an unsubstituted or Ra-substituted C₂ to C₅ alkynyl group, an unsubstituted or Ra-substituted C₃ to CsN-heterocyclic alkyl group, and a C₃ to C₅ N-heteroaryl group;
R₄, R₅ and R₆ are each independently selected from a hydrogen atom, a C₁ to C₅ alkyl sulfide group, C₂ to C₅ thioether, a C₃ to C₅ N-heterocyclic alkyl group, a C₃ to C₅ N heteroaryl group, an unsubstituted or Ra-substituted C₁ to C₅ alkyl group, an unsubstituted or Ra-substituted C₂ to C₅ alkenyl group, and an unsubstituted or Ra-substituted C₂ to C₅ alkynyl group;
a substituent Ra of each group is independently selected from a halogen, a C₁ to C₅ aldehyde group, a C₂ to C₅ carbonyl group, a C₂ to C₅ ester group, a sulfonyl group, an amino group, and a C₂ to C₅ acylamino group or cyano group; and
based on the total mass of the electrolyte solution, the compound of Formula (I) has a mass percentage of A4 %, and 0.01 ≤ A4 ≤ 5.

11. The secondary battery according to claim 10, **characterized in that**, the compound of Formula (I) is at least one selected from the following compounds:

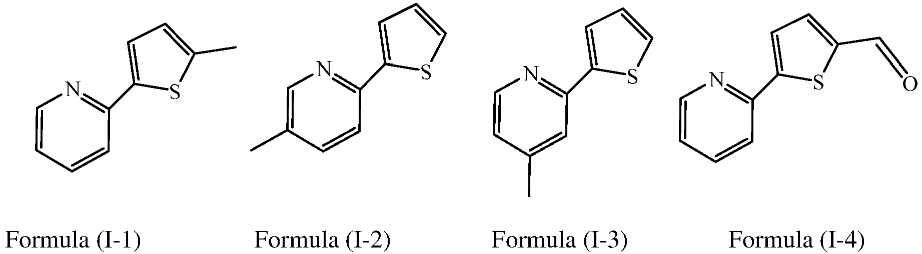

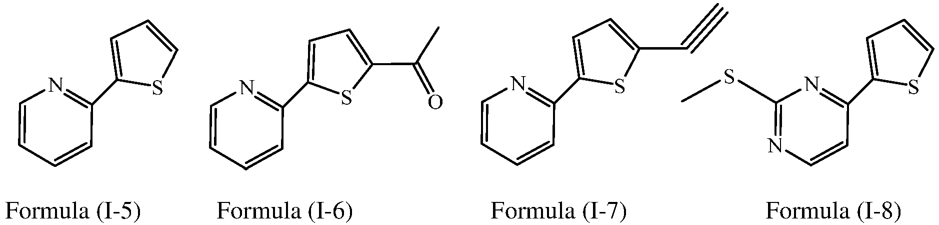

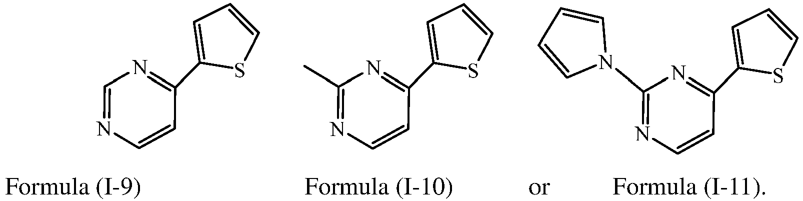

12. The secondary battery according to any one of claims 1 to 11, **characterized in that**, the positive electrode material layer comprises a positive active material, a particle diameter Dv10 of the positive active material is D1 µm, a particle diameter Dv50 of the positive active material is D2 µm, 2.4 ≤ D1 ≤ 5.5, and 1.5 ≤ D2/D1 ≤ 5.

13. The secondary battery according to claim 12, **characterized in that**, 4.8 ≤ A x (D2/D1) ≤ 55.

14. The secondary battery according to claim 12 or 13, **characterized in that**, an average sphericity of the positive active material is S50, and 0.65 ≤ S50 ≤ 0.99.

15. An electronic apparatus, **characterized in that**, the electronic apparatus comprises the secondary battery according to any one of claims 1 to 14.
